Europäisches Patentamt

European Patent Office

Office européen des brevets

(11) Publication number: **0 433 082 A1**

## (12) EUROPEAN PATENT APPLICATION

(21) Application number: **90313648.9**

(22) Date of filing: **14.12.90**

(51) Int. Cl.⁵: **G11B 7/00**, G11B 27/00, G11B 27/10

(30) Priority: **14.12.89 JP 324408/89**

(43) Date of publication of application:
**19.06.91 Bulletin 91/25**

(84) Designated Contracting States:
**DE FR GB**

(71) Applicant: **ASACA CORPORATION**
**2-4-1 Nishishinjuku, Shinjuku-Ku**
**Tokyo-To(JP)**

(72) Inventor: **Nagai, Satoshi**
**6-8-1 Ichiban-Cho**
**Tachikawa-Shi(JP)**

(74) Representative: **Charlton, Peter John et al**
**ELKINGTON AND FIFE Beacon House 113**
**Kingsway**
**London WC2B 6PP(GB)**

(54) Synchronizing signal detector for multi-beam optical disk unit.

(57) There is disclosed a synchronizing signal detector for a multi-beam optical disk unit, in which a pre-synchronizing signal is used to provide redundancy in the detection of a first block synchronizing signal at the beginning of a sector of the multi-beam optical disk unit, thereby ensuring the detection of the first block synchronizing signal for each sector which is liable to become unstable as compared with the detection of block synchronizing signals of second, third, ... blocks. Once the first block synchronizing signal of each sector is detected, the block synchronizing signals, of the subsequent second, third, ... blocks can be detected without fail through utilization of a flywheel signal generator.

EP 0 433 082 A1

# SYNCHRONIZING SIGNAL DETECTOR FOR MULTI-BEAM OPTICAL DISK UNIT

The present invention relates to a synchronizing signal detector for an optical disk unit.

For precise synchronization of signals to be reproduced from respective tracks from an optical disk, correct detection of the synchronization signals is essential. However, it is very difficult to correctly detect the synchronization signals due to a fluctuation of a time interval between synchronizing signals, a fluctuation of the beam interval, and a drop-out of any synchronizing signal.

It is an object of the present invention to provide a synchronizing signal detector which is suitable for use in optical disk units, in particular, in multi-beam optical disk units of the type employing a semiconductor laser array as the optical head, and which is capable of preventing a dropout of a synchronizing signal included in the reproduced signal through a failure of its detection and preventing an erroneous detection of a false signal as a block synchronizing signal.

To attain the above object, the synchronizing signal detector for a multi-beam optical disk unit according to the present invention comprising: p-exclusive-NOR circuits for detecting coincidence between an n-bit synchronizing signal reproduced by n-optical beams from the optical head and a p-bit reference synchronizing signal; a counter for counting p-outputs from the p-exclusive-NOR circuits; window pulse generating means whereby when the counter detects an all-bit coincident synchronizing signal having its all bits coincident with p-bits of the reference synchronizing signal, a window pulse is generated which has an arbitrary b-bit width starting at the all-bit coincident synchronizing signal; a delay circuit for delaying by c-bits (where $c \simeq b/2$) a synchronizing signal which is generated when the counter detects-that q- or more bits (where $0 < q < p$) of the n-bit reproduced synchronizing signal by the n-optical beams coincide with the p-bit reference synchronizing signal; and an AND circuit for ANDing the output of the delay circuit and the window pulse. The output of the AND circuit is used as a normal synchronizing signal for each optical beam.

The present invention will be described in detail below in comparison with prior art with reference to accompanying drawings, in which:

Fig. 1 is a front view showing the basic construction of a magneto-optical disk drive embodying the present invention;

Fig. 2 is a plan view schematically showing a recording format pattern on a disk for use in the present invention;

Fig. 3 is a diagram showing a conventional sector recording format;

Fig. 4 is a diagram schematically showing a sector recording format according to an embodiment of the present invention;

Fig. 5 is a block diagram explanatory of the detection of a synchronizing signal according to the present invention;

Fig. 6 illustrates diagrams showing synchronizing signal bit patterns according to the present invention;

Fig. 7 is a block diagram illustrating an example of the constitution of the present invention;

Fig. 8 illustrates bit pattern diagrams explanatory of the operation of this invention circuit; and

Fig. 9 shows waveform diagrams explanatory of the operation of a synchronizing signal detector according to the present invention.

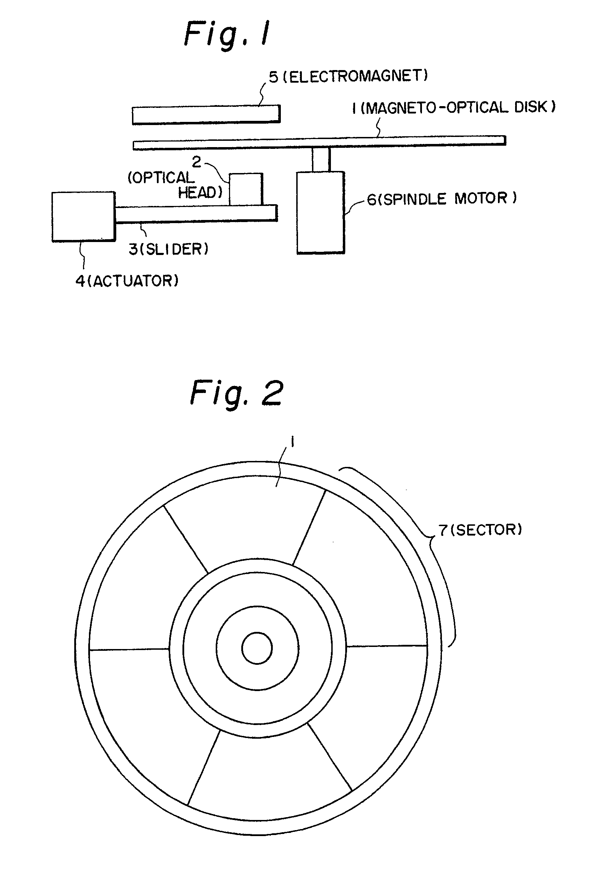

Fig. 1 shows a basic constitution of an example of a magneto-optical disk drive. Reference numeral 1 indicates a magneto-optical disk, 2 an optical head, 3 a slider, 4 an actuator for the slider, 5 an electromagnet for generating erasing and recording magnetic fields, and 6 a spindle motor.

The magneto-optical disk 1 has its recording area divided into a plurality of sectors, six in the example shown in Fig. 2.

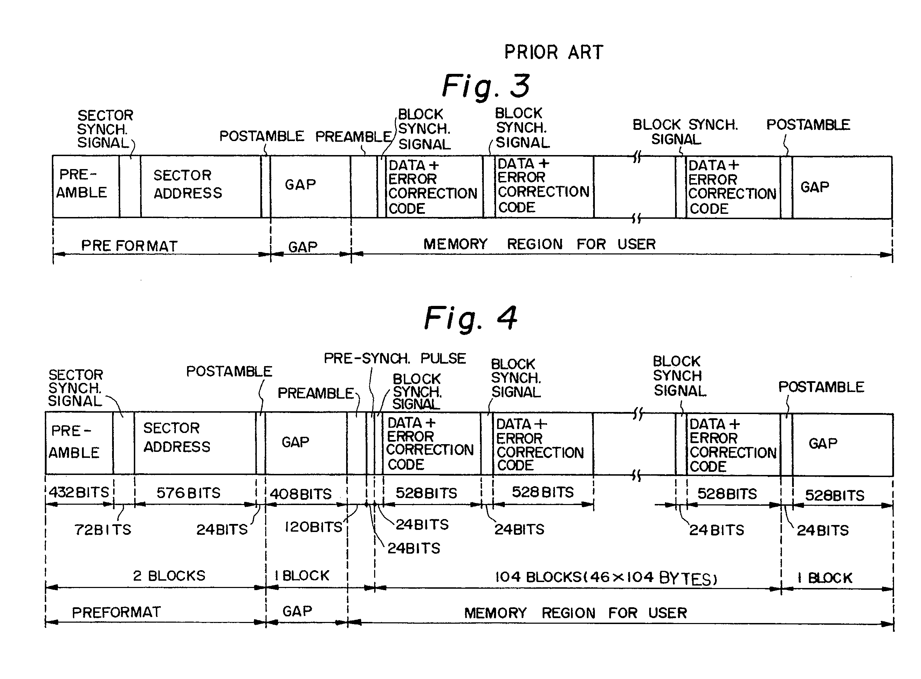

For accurate synchronization of signals for recording and playback of the optical disk there are employed, in combination, three kinds of techniques such as bit synchronization, block synchronization and sector synchronization. In the optical disk 1, as shown in its sector recording format of Fig. 3, a preamble, a sector synchronization signal, a sector address, etc. are recorded, as a preformat, before a user recording area. Recording of data starts with bit synchronization in the preamble of the preformat, followed by sector synchronization, then by reading the sector address. When a target sector is detected, data is recorded in a predetermined format. In the data there are inserted block synchronization signals at regular intervals.

In the case of playback, the target sector is searched using the sector address, bit synchronization is performed in the preamble in the user recording area and then data is sequentially read out using the block synchronization signals inserted therein.

The data transfer rate can be increased by using a plurality of optical beams, for example, four optical beams. The four beams from the optical head are used to record data simultaneously on four tracks in parallel and to reproduce therefrom the data accordingly.

This calls for precise synchronization of signals to be reproduced from the respective tracks, but the use of a multi-beam laser array precludes the necessity of employing a complex control function therefor. Even if the multi-beam laser array is employed, however, a time interval between synchronizing signals fluctuates owing to undesired speed variations and off-center hole (wow and flutter) of the disk, for instance. The beam interval also differs with laser arrays due to "dispersion" introduced during their manufacture process or to the dispersion of their head mounting angle in each disk drive unit. Further, the beam intervals differs between reproduction from inner tracks of the disk and reproduction from outer tracks thereof. Besides, there are cases where all bits of the synchronizing signal are not completely reproduced, that is, some of them drop out, and where the phase of the synchronizing signal included in the signal reproduced from each track is incorrect. Moreover, a data signal hardly distinguishable from the synchronizing signal may sometimes be mistaken for the synchronizing signal.

The present invention will now be described to resolve the above problems in correctly detecting a synchronizing signal.

An embodiment of the present invention will hereinafter be described as being applied to a multi-beam optical disk unit which employs a 4-beam semiconductor laser array in the optical head and performs synchronous, parallel reproduction of data from four tracks recorded synchronously and in parallel.

Since synchronizing signals of four channels which are reproduced from four tracks are detected in exactly the same manner, the detection of the synchronizing signal in one channel will be described.

The magneto-optical disk 1 has its recording area divided into six radial sectors 7 as shown in Fig. 2. The recording format of each sector is composed of a preformat, a gap, and a user recording area as depicted in Fig. 4. The user recording area includes a preamble, a pre-synchronizing signal, and a 104-block data recording area, each block being preceded by a 24-bit block synchronizing signal. In the embodiment of the present invention the pre-synchronizing signal is positioned immediately before a first "block synchronizing signal" of each sector 7, for detecting the beginning of the user recording area of each sector 7. Where the block synchronizing signal is detected at the beginning of the sector 7 with no pre-synchronizing signal being detected, the block synchronizing signal is regarded as a first "block synchronizing signal" (hereinafter referred to as a "first block synchronizing signal") of the sector. Where the pre-synchronizing signal is detected but the first block synchronizing signal is not detected, the former is regarded as the first block synchronizing signal. In short, the pre-synchronizing signal is used to provide redundancy in the detection of the first block synchronizing signal at the beginning of the sector, thereby ensuring the detection of the first block synchronizing signal for each sector which is liable to become unstable as compared with the detection of block synchronizing signals of second, third, ... blocks. Once the first block synchronizing signal of each sector is detected, the block synchronizing signals of the subsequent second, third, ... blocks can be detected without fail through utilization of a flywheel signal generator described later.

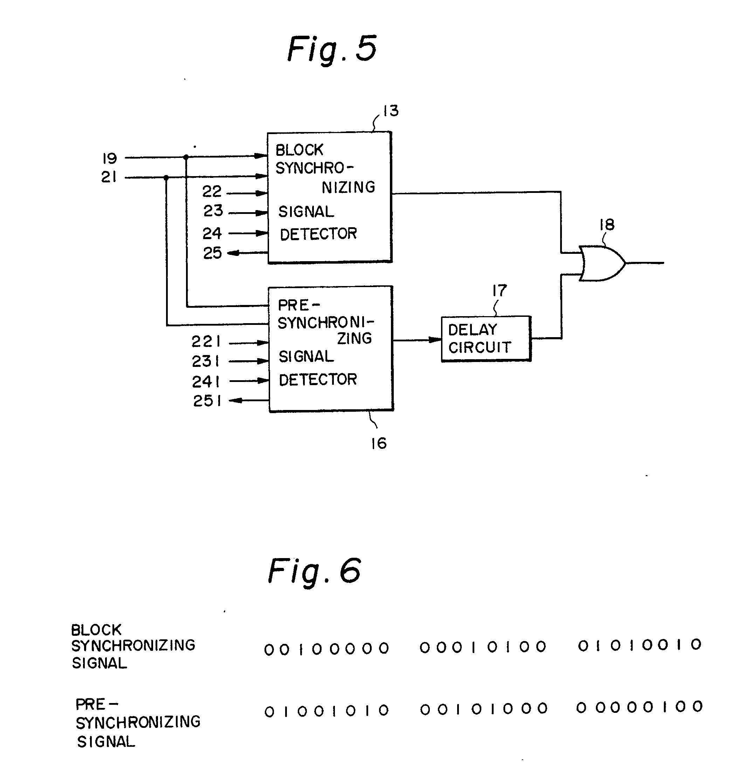

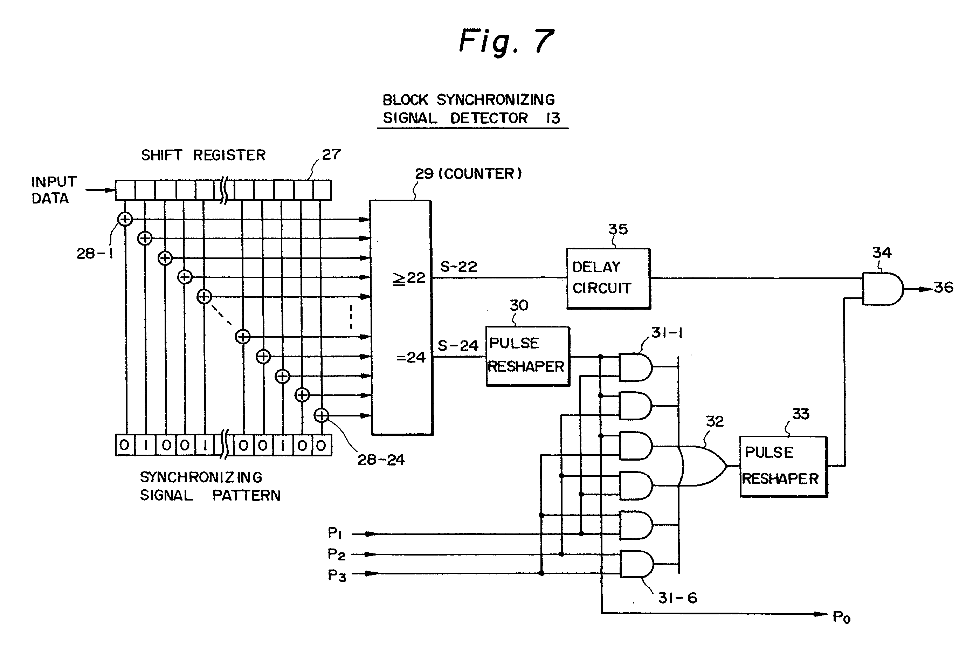

Fig. 5 is a block diagram, for explaining the detection of the synchronizing signal according to the present invention. Channels one through four are identical in construction. Reference numeral 13 indicates a block synchronizing signal detector for detecting the block synchronizing signal from a disk having recorded thereon data in such a format as shown in Fig. 4. The block synchronizing signal detector 13 will be described with reference to Fig. 7. Where no block synchronizing signal is detected by the block synchronizing signal detector 13, a signal, by which the block synchronizing signal having dropped out is interpolated at the timing when it is to be detected, is created by an internal counter in a flywheel signal generator not shown.

Reference numeral 21 indicates a data signal reproduced from the disk, and 22, 23 and 24 pulses each having an a-bit, for example, 8-bit width produced using, as a trigger, the all-bit coincident block synchronizing signal detected from the reproduced signal in each of three other channels, i.e. from each of three other tracks. Reference numeral 25 denotes a pulse of an 8-bit width produced using, as a trigger, the all-bit coincident block synchronizing signal, the pulse 25 being provided to each block synchronizing signal detector of the three other channels.

Reference numerals 221, 231, 241 and 251 in a pre-synchronizing signal detector 16 designate pulses corresponding to those 22, 23, 24 and 25 of the above-mentioned block synchronizing signal detector 13. These pulses can be explained by replacing the "pre-synchronizing signal" for the "block synchronizing signal" in the above description given of the pulses 22, 23, 24 and 25.

The pre-synchronizing signal detected from the pre-synchronizing signal detector 16 is applied via a delay circuit 17 to an OR circuit 18, wherein it is ORed with the block synchronizing signal from the block synchronizing signal detector 13. The delay time of the delay circuit 17 is the time interval between the pre-synchronizing signal and the block synchronizing signal. By this, the first block synchronizing signal can be reproduced correctly, even if either one of the pre-synchronizing signal and the first block synchronizing signal drops out.

In a case where the synchronizing signals of the second, third, ... blocks drop out, they are interpolated by the afore-mentioned flywheel signal generator.

In this embodiment no complicated control circuit is needed for the synchronizing signal detection, since spots of optical beams are spaced apart with an appreciably high degree of accuracy through use of the 4-beam semiconductor laser array. According to the present invention, precisely synchronized signals can be obtained by reproducing signals correctly including first, second, third, ... block synchronizing signals and applying the signals to a FIFO (First-In First-Out) memory of a small capacity, say, several bytes.

The block synchronizing signal detector 13, the pre-synchronizing detector 16 and the flywheel signal generator (not shown) operate on clock pulses included in the reproduced signal from the disk 1. On the other hand, the circuit structure subsequent to the FIFO memory is synchronized with data by external precise reference clock pulses, because respective bits are synchronized more precisely by the action of the FIFO memory.

Fig. 6 shows formats of the pre-synchronizing signal and the block synchronizing signal.

Fig. 7 illustrates in block form the block synchronizing signal detector 13. Input data reproduced from the optical disk 1 is provided via a 24-bit shift register 27 to 24 exclusive-NOR gates 28-1 through 28-24, and the number of bits coincident with the reference block synchronizing signal is counted by a counter 29 called as a bit-number counter.

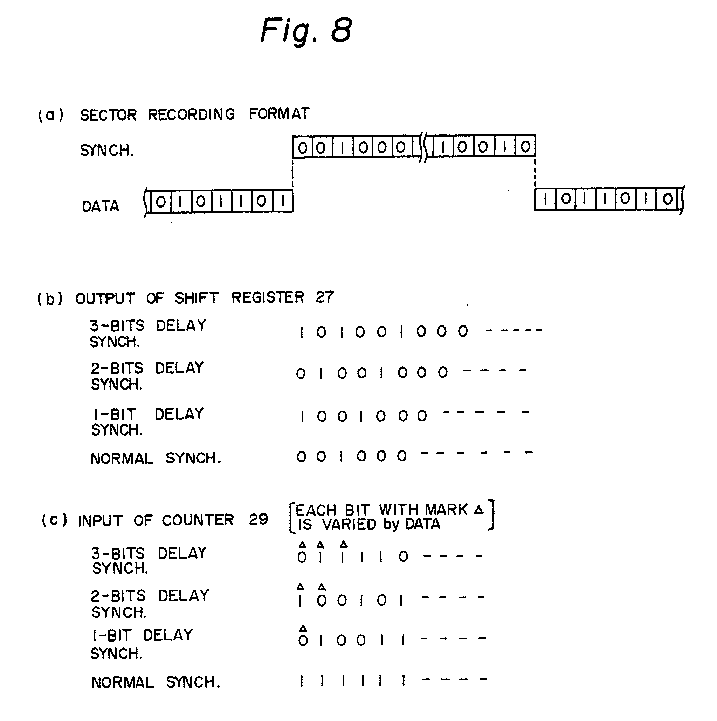

Fig. 8 is a diagram for explaining the above-described detection of the degree of coincidence of the bit pattern of the block synchronizing signal. In Fig. 8(a) the synchronizing signal part and the data part are shown separately of each other so as to facilitate a better understanding of the sector recording format. Fig. 8(b) shows outputs of the shift register 27 in the cases where the synchronizing signal is delayed by three bits, two bits and one bit and where the synchronizing signal is not delayed. Fig. 8(c) shows inputs to the bit-number counter 29 in the cases where the synchronizing signal is delayed by three bits, two bits and one bit and where the synchronizing signal is not delayed, triangles indicating variations by data.

An input block synchronizing signal whose 24 bits have all been detected to be coincident with the reference block synchronizing signal by counting with the bit-number counter 29 will be identified by S-24, and an input block synchronizing signal whose 22 or more bits have been detected to be coincident with the reference block synchronizing signal will be identified by S-22.

In a case where the input block synchronizing signal S-24 is detected in two or more of the four beams and the input block synchronizing signal S-22 is present within five bits before and after the signal S-24, the signal S-22 is also regarded as a block synchronizing signal by the circuit construction described below.

The block synchronizing signal S-24, whose 24 bits are coincident with the reference block synchronizing signal, is reshaped by a pulse reshaping circuit 30 to a pulse $P_0$ of an a-bit width, an 8-bit width in this embodiment. The pulse $P_0$ thus produced is applied to AND circuits 31-1, 31-2 and 31-3 and, at the same time, it is sent to a similar decesion circuit in each of the other three channels. Reference characters $P_1$, $P_2$ and $P_3$ denote pulses each produced from the all-bit coincident block synchronizing signal detected from each of the other three channel signals. These pulses are 8-bit in width and are applied to the AND circuits 31-1 through 31-6 as shown in Fig. 7. The outputs of the AND circuits 31-1 through 31-6 are each reproduced from two optical beams whose bits are all coincident with bits of the reference block synchronizing signal. These outputs are applied to an OR circuit 32, the output of which is provided to a pulse reshaping circuit 33, whereby it is reshaped to a window pulse of a b-bit pulse width, in this embodiment, a 10-bit width. The window pulse thus generated is fed to an AND circuit 34. The block synchronizing signal S-22 whose 22 or more bits are coincident with bits of the reference block synchronizing signal is applied to the AND circuit 34 after being delayed by a delay circuit 35 for a c-bit period, in this embodiment, for a 5-bit period. The output signal 36 of the AND circuit 34 is regarded as a block synchronizing pulse.

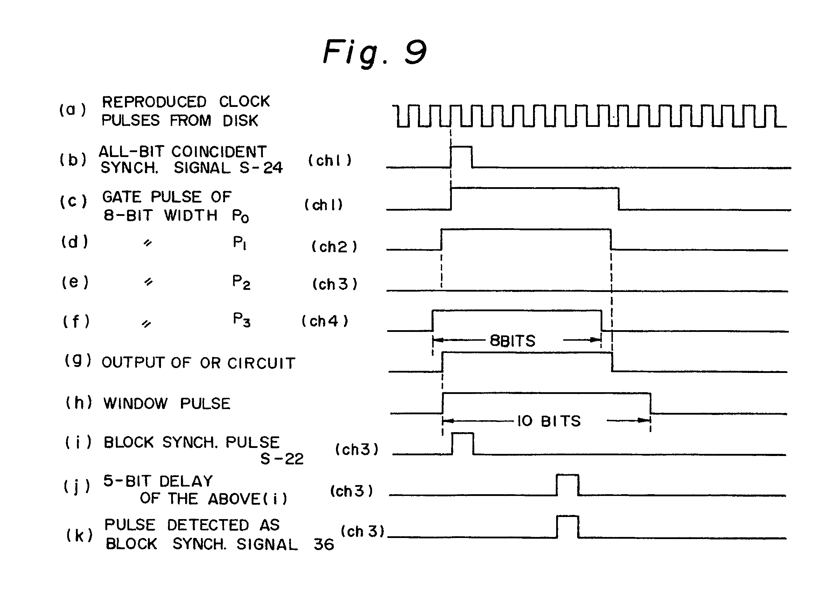

Fig. 9 shows a timing charts showing the above-mentioned pulses related to operations of respective parts in Fig. 7. In Fig. 9, (a) shows clock pulses reproduced from the disk, (b) the all-bit coincident synchronizing signal S-24, (c) the gate pulse of an 8-bit width which is the output from the pulse reshaper 30, and (d), (e) and (f) gate pulses of an 8-bit width corresponding to the pulses $P_1$, $P_2$ and $P_3$ in Fig. 7, respectively. In this embodiment, however, no gate pulse is shown in (e) since some of the bits of the block synchronizing signal are not coincident with the reference block synchronizing signal. Now, let it be assumed that this channel is a third channel.

In Fig. 9, (g) shows the output of the OR circuit 32, (h) the output of the pulse reshaper 33, that is, the window pulse of the 10-bit width, and (i) the block synchronizing pulse signal S-22 whose 22 or more bits are coincident with bits of the reference synchronizing signal, and in some case, all of the 24 bits may coincide with bits of the reference synchronizing signal. In this embodiment, the block synchronizing pulse signal S-22 is assumed to appear in the third channel shown in (e). Further, (j) shows the output of the 5-bit delay circuit 35 which delays the block synchronizing pulse signal S-22 depicted in (i), and (k) the signal (pulse) 36 which is regarded as the block synchronizing signal.

As described above, the present invention precludes, in the detection of the block synchronizing signal 36, the possibilities of an erroneous detection of a false block synchronizing signal and a failure of detection of the normal block synchronizing signal, by gating through utilization of the block synchronizing signals of the other channels.

While the above embodiment has been described in respect of the case where the 10-bit window pulse is generated when the all-bit coincident synchronizing signal is detected for at least two of the four optical beams from the optical head, it is also possible to employ an arrangement in which when the all-bit coincident synchronizing signal is detected for three of the four beams from the optical head, a window pulse is produced which starts at the detected all-bit coincident synchronizing signal. In this instance, the six 2-input AND circuits 31-1 through 31-6 shown in Fig. 7 are replaced by four 3-input AND circuits.

Also for the pre-synchronizing signal, the detection of a false signal and a failure of the detection of the pre-synchronizing signal are prevented by exactly the same method as used for the block synchronizing signal.

The first block synchronizing signal of each sector is detected by the combined use of the block synchronizing signal and the pre-synchronizing signal detected very carefully as described previously, thereby preventing the detection of a false signal and a failure of the detection of the first block synchronizing signal.

Although the above embodiment has been described in connection with the multi-beam optical disk unit employing a multi-beam laser array, the method for detecting the first block synchronizing signal of each sector without fail by the combined use of the pre-synchronizing signal and the block synchronizing signal is applicable as well to a multi-beam optical disk unit with no multi-beam laser array and a single-beam optical disk unit.

As described above in detail, the present invention minimizes the possibility of an erroneous detection of the block synchronizing signal or a dropout of the block synchronizing signal through a failure in its detection in the multi-beam optical disk unit of the type having its optical head formed by a semiconductor laser array.

Since the first block synchronizing signal of each sector is detected by the combined use of the pre-synchronizing signal immediately preceding it and the block synchronizing signal, it is possible to prevent the first block synchronizing signal of each sector from dropping out or being erroneously detected, this being highly effective for stable signal reproduction.

The above method for surely detecting the first block synchronizing signal of each sector by the combined use of the pre-synchronizing signal and the block synchronizing signal is applicable as well to a single-beam optical disk unit.

**Claims**

1. A synchronizing signal detector for a multi-beam optical disk unit, comprising:
   p-exclusive-NOR circuits for detecting coincidence between each of synchronizing signals reproduced by optical beams from an optical head and a p-bit reference synchronizing signal;
   a counter for counting p-outputs from said p-exclusive-NOR circuits;
   window pulse generating means whereby when an all-bit coincident synchronizing signal whose bits are all coincident with bits of said reference synchronizing signal is detected by said counter for at least m (where $0 < m \leq n$) of n-optical beams from said optical head, a window pulse having an arbitrary width of b-bits, which starts at said all-bit coincident synchronizing signal is generated;
   a delay circuit for delaying for a c-bit (where $c \simeq b/2$) period a synchronizing signal which is generated when said counter detects that q (where $0 < q < p$) or more bits of each of said synchronizing signals reproduced by said n-optical beams are coincident with bits of said reference synchronizing signal; and
   an AND circuit for ANDing the output of said delay circuit and said window pulse;
   wherein the output of said AND circuit is regarded as a normal synchronizing signal in each optical beam.

2. A synchronizing signal detector for a multi-beam optical disk unit according to claim 1, in which said p is twenty four, said q being twenty two.

3. A synchronizing signal detector for a multi-beam optical disk unit according to claim 1, in which said p is twenty four, said q being twenty two, said m being equal to one half said v, said c being one half said b.

4. A synchronizing signal detector for a multi-beam optical disk unit according to claim 3, in which said $m$ is two, said $c$ being five.

# *Fig. 1*

5 (ELECTROMAGNET)

1 (MAGNETO-OPTICAL DISK)

2
(OPTICAL
HEAD)

6(SPINDLE MOTOR)

3(SLIDER)

4(ACTUATOR)

# *Fig. 2*

1

7(SECTOR)

## PRIOR ART

### Fig. 3

SECTOR SYNCH. SIGNAL

POSTAMBLE PREAMBLE — BLOCK SYNCH. SIGNAL — BLOCK SYNCH. SIGNAL — BLOCK SYNCH. SIGNAL — POSTAMBLE

| PRE-AMBLE | SECTOR ADDRESS | GAP | DATA + ERROR CORRECTION CODE | DATA + ERROR CORRECTION CODE | DATA + ERROR CORRECTION CODE | GAP |

GAP

MEMORY REGION FOR USER

PRE FORMAT

### Fig. 4

SECTOR SYNCH. SIGNAL

POSTAMBLE — PRE-SYNCH. PULSE — PREAMBLE — BLOCK SYNCH. SIGNAL — BLOCK SYNCH. SIGNAL — BLOCK SYNCH SIGNAL — POSTAMBLE

| PRE-AMBLE | SECTOR ADDRESS | GAP | DATA + ERROR CORRECTION CODE | DATA + ERROR CORRECTION CODE | DATA + ERROR CORRECTION CODE | DATA + ERROR CORRECTION CODE | GAP |

432BITS — 72BITS — 576BITS — 24BITS — 408BITS — 120BITS — 24BITS — 528BITS — 24BITS — 528BITS — 24BITS — 528BITS — 24BITS — 528BITS

2 BLOCKS — 1 BLOCK — 1 BLOCK

104 BLOCKS (46×104 BYTES)

PREFORMAT — MEMORY REGION FOR USER

8

## *Fig. 5*

## *Fig. 6*

BLOCK
SYNCHRONIZING       0 0 1 0 0 0 0 0       0 0 0 1 0 1 0 0       0 1 0 1 0 0 1 0
SIGNAL

PRE-
SYNCHRONIZING       0 1 0 0 1 0 1 0       0 0 1 0 1 0 0 0       0 0 0 0 0 1 0 0
SIGNAL

*Fig. 7*

BLOCK SYNCHRONIZING
SIGNAL DETECTOR 13

SHIFT REGISTER 27

INPUT DATA

28-1

29 (COUNTER)

35

DELAY CIRCUIT

34

≧22    S-22

36

30

=24    S-24    PULSE RESHAPER

31-1

32

33

PULSE RESHAPER

28-24

SYNCHRONIZING SIGNAL PATTERN

P₁
P₂
P₃

31-6

P₀

EP 0 433 082 A1

# Fig. 8

(a) SECTOR RECORDING FORMAT

SYNCH. | 0 | 0 | 1 | 0 | 0 | 0 |〜| 1 | 0 | 0 | 1 | 0 |

DATA | 0 | 1 | 0 | 1 | 1 | 0 | 1 | ... | 1 | 0 | 1 | 1 | 0 | 1 | 0 |

(b) OUTPUT OF SHIFT REGISTER 27

3-BITS DELAY
SYNCH.              1 0 1 0 0 1 0 0 0 - - - - -

2-BITS DELAY
SYNCH.              0 1 0 0 1 0 0 0 - - - -

1-BIT  DELAY
SYNCH.              1 0 0 1 0 0 0 - - - - -

NORMAL  SYNCH.      0 0 1 0 0 0 - - - - - -

(c) INPUT OF COUNTER 29  $\begin{bmatrix} \text{EACH BIT WITH MARK } \triangle \\ \text{IS VARIED by DATA} \end{bmatrix}$

3-BITS  DELAY
SYNCH.              $\overset{\triangle}{0}$ $\overset{\triangle}{1}$ $\overset{\triangle}{1}$ 1 1 0 - - - -

2-BITS  DELAY
SYNCH.              $\overset{\triangle}{1}$ $\overset{\triangle}{0}$ 0 1 0 1 - - - -

1-BIT  DELAY
SYNCH.              $\overset{\triangle}{0}$ 1 0 0 1 1 - - - -

NORMAL  SYNCH.      1 1 1 1 1 1 - - - -

# Fig. 9

(a) REPRODUCED CLOCK PULSES FROM DISK

(b) ALL-BIT COINCIDENT SYNCH. SIGNAL S-24 (ch1)

(c) GATE PULSE OF 8-BIT WIDTH $P_0$ (ch1)

(d) 〃 $P_1$ (ch2)

(e) 〃 $P_2$ (ch3)

(f) 〃 $P_3$ (ch4)

8BITS

(g) OUTPUT OF OR CIRCUIT

(h) WINDOW PULSE

10 BITS

(i) BLOCK SYNCH. PULSE S-22 (ch3)

(j) 5-BIT DELAY OF THE ABOVE(i) (ch3)

(k) PULSE DETECTED AS BLOCK SYNCH. SIGNAL 36 (ch3)

EP 0 433 082 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A2 - 0 322 782 (SONY CORP.) * Fig. 2,3; abstract * | 1 | G 11 B 7/00 G 11 B 27/00 G 11 B 27/10 |
| A | US - A - 4 866 691 (YOKOGAWA) * Fig.2; abstract * | 1 | |

TECHNICAL FIELDS SEARCHED (Int. Cl.5)

G 11 B 7/00
G 11 B 20/00
G 11 B 27/00

The present search report has been drawn up for all claims

| Place of search | Date of completion of the search | Examiner |
|---|---|---|
| VIENNA | 06-02-1991 | BERGER |